# EUROPÄISCHE PATENTSCHRIFT

(11) **EP 2 531 064 B1**
(45) Veröffentlichungstag und Bekanntmachung des Hinweises auf die Patenterteilung: **20.04.2016**
(21) Anmeldenummer: 11707551.5
(22) Anmeldetag: 04.02.2011
(51) Int. Cl.: A47B 77/18, B65F 1/14, A47B 88/00

(54) **MÖBELAUSZUG**
FURNITURE PULL-OUT
TIROIR POUR MEUBLE

(30) Priorität: 05.02.2010 AT 1672010
(43) Veröffentlichungstag der Anmeldung: 12.12.2012
(73) Patentinhaber: Julius Blum GmbH, 6973 Höchst (AT)
(72) Erfinder: RÖCK, Siegfried, A-6973 Höchst (AT)
(74) Vertreter: Torggler & Hofinger Patentanwälte
(86) Internationale Anmeldenummer: PCT/AT2011/000065
(87) Internationale Veröffentlichungsnummer: WO 2011/094789

(56) Entgegenhaltungen:
- EP-A2- 1 136 392
- AT-U1- 7 533
- DE-A1- 4 416 237
- DE-U1- 29 507 322
- DE-U1-202005 006 862
- DE-U1-202005 006 952
- US-A- 3 524 692

## Beschreibung

Die Erfindung betrifft einen bewegbaren Möbelauszug für ein Möbel mit einer zwischen einer Rückwand und einer Frontblende angeordneten Seitenwand und einer zwischen der Rückwand und der Frontblende angeordneten Relingstange.

Weiters betrifft die Erfindung auch ein Möbel mit einem bewegbaren Möbelauszug.

Derartig bewegbare Möbelauszüge sind in einer Vielzahl bereits bekannt. Dabei erstrecken sich die Seitenwände des Möbelauszuges üblicherweise nicht über seine gesamte Höhe. Somit ist die Frontblende nur zum Teil durch die Seitenwand abgestützt. Aus diesem Grunde ist es bereits bekannt, Relingstangen einzusetzen, um die Stabilität der Frontblende zu erhöhen.

Aufgabe der Erfindung ist es, einen stabilen bewegbaren Möbelauszug zu schaffen. Dies wird vom erfindungsgemäßen bewegbaren Möbelauszug dadurch erreicht, dass die Relingstange unterhalb der Seitenwand und unter dem Schienensystem angeordnet ist, wobei die Relingstange eine Verstellvorrichtung aufweist, durch welche die Frontblende neigbar ist, wobei die Verstellvorrichtung die effektive Länge der Relingstange verändert, wobei sich die Relingstange einerseits vorne an der Innenseite der Frontblende und andererseits hinten an der Rückwand abstützt.

Durch die Anordnung der Relingstange unterhalb der Seitenwand wird es ermöglicht, dass die Seitenwand im oberen Bereich des Möbelauszugs angeordnet werden kann und - durch Anordnung der Relingstange unterhalb der Seitenwand wird die Stabilität der Frontblende erhöht.

Speziell bei bewegbaren Möbelauszügen, die dazu dienen, hängend entnehmbare Gegenstände aufzubewahren - wie etwa bei Mülltrennungssystemen - muss die Stabilität speziell im oberen Bereich des Möbelauszugs gegeben sein, da an diesem die größte Krafteinwirkung stattfindet. Um die Stabilität der Frontblende trotzdem zu gewährleisten wird die Relingstange unterhalb der Seitenwand angeordnet.

Weitere vorteilhafte Ausführungsformen der Erfindung sind in den abhängigen Ansprüchen definiert.

Erfindunsgemäß weist die Relingstange eine Verstellvorrichtung auf, durch welche die Frontblende neigbar ist. Durch eine Verstellvorrichtung wird es ermöglicht, die Frontblende am Möbelkorpus auszurichten, was besonders dann notwendig ist, wenn es zu Toleranzen in den Positionen des Führungssystems kommt und dadurch bedingt sich die Frontblende vom Möbelkorpus wegneigt oder sich ihm im oberen Bereich nähert bzw. an ihm sogar anschlägt.

Erfindungsgemäß ist weiterhin vorgesehen, dass die Verstellvorrichtung derart ausgebildet ist, dass sie die effektive Länge der Relingstange verändert, wobei sich die Relingstange einerseits vorne an der Innenseite der Frontblende und andererseits hinten an der Rückwand abstützt. Durch eine längenveränderliche Relingstange wird es ermöglicht, auf einfache Art und Weise die Neigung der Frontblende zu beeinflussen.

Erfindungsgemäß ist die Seitenwand zumindest teilweise, vorzugsweise im Wesentlichen vollständig, über dem Schiehensystem ausgebildet. Durch ein Schienensystem wird eine bequeme Möglichkeit geschaffen, den bewegbaren Möbelauszug aus- und einzuschieben. Durch die Anordnung der Seitenwand über dem Schienensystem kann sich diese am Schienensystem abstützen und dies trägt somit zu einem stabilen System bei.

Besonders bevorzugt kann vorgesehen sein, dass der Möbelauszug eine Aufnahmevorrichtung - vorzugsweise für ein Aufbewahrungssystem zur Mülltrennung - aufweist, wobei die - vorzugsweise rahmenförmige - Aufnahmevorrichtung zumindest teilweise, vorzugsweise im Wesentlichen vollständig, über und/oder zumindest teilweise zwischen zweier Seitenwände des Möbelauszuges ausgebildet ist. Durch die Anbringung der Aufnahmevorrichtung über den Seitenwänden kann diese auf einfache Art und Weise eingehängt werden bzw. sorgt die Positionierung der Aufnahmevorrichtung zwischen den beiden Seitenwänden zu einem stabilen System für den bewegbaren Möbelauszug.

Als besonders vorteilhaft hat es sich dabei herausgestellt, wenn der Möbelauszug ein Aufbewahrungssystem zur Mülltrennung aufweist, wobei das Aufbewahrungssystem - vorzugsweise werkzeuglos - an der Aufnahmevorrichtung lösbar befestigbar ist. Speziell Mülltrennsysteme sind gut geeignet, um an der Aufnahmevorrichtung lösbar befestigbar angeordnet zu werden, da diese oftmals zu deren Entleerung entnommen werden müssen.

Gemäß einem bevorzugten Ausführungsbeispiel kann vorgesehen sein, dass das Aufbewahrungssystem hängend in der Aufnahmevorrichtung angeordnet ist und die Aufbewahrungsbehältnisse bei ausgezogenem Möbelauszug im Wesentlichen senkrecht aus der Aufnahmevorrichtung entnehmbar sind. Eine senkrechte Entnahme kann einfach durch einen Bediener erfolgen und somit ist ein praktikabler Arbeitsablauf erzielbar.

Als vorteilhaft hat es sich weiters herausgestellt, dass die Rückwand des Möbelauszugs vom hinteren Ende des Möbelauszugs beabstandet angeordnet ist. Eine in Richtung Frontblende vorversetzte Rückwand kann verhindern, dass sich das Aufbewahrungssystem zu weit im hinteren Bereich des Möbelauszuges befindet und dadurch eine einfache Entnahme verhindern würde.

Als vorteilhaft hat es sich herausgestellt, wenn die Rückwand des Möbelauszugs vom hinteren Ende des Schienensystems, vorzugsweise einer Ladenschiene des Schienensystems, beabstandet angeordnet ist. Somit wird es ermöglicht, dass bereits zum Stand der Technik gehörende Schienensysteme bei einem derartigen Möbelauszug zum Einsatz kommen.

Bevorzugt kann weiters vorgesehen sein, dass die Rückwand des Möbelauszugs mit Abstand von den Hinterkanten der Seitenwände des Möbelauszugs nach vorne versetzt angeordnet ist. Dadurch wird es ermöglicht, dass bereits zum Stand der Technik gehörende Seitenwände an diesen Möbelauszug einsetzbar sind.

Gemäß einem möglichen Ausführungsbeispiel kann vorgesehen sein, dass vorzugsweise aus Kunststoff gefertigte Beschlagteile vorgesehen sind, die die Rückwand mit - vorzugsweise den Hinterkanten - den Seitenwänden - vorzugsweise werkzeuglos und/oder lösbar - verbinden. Dadurch wird ermöglicht, dass eine einfache Montage der Rückwand mittels der Beschlagteile an den Seitenwänden erfolgt und gleichzeitig kann über diese Beschlagteile ein verkürzter Abstand der Rückwand zur Frontblende hergestellt werden.

Gemäß einem bevorzugten Ausführungsbeispiel kann vorgesehen sein, dass die Rückwand des Möbelauszugs einstückig ausgebildet ist oder dass die Rückwand des Möbelauszugs zwei oder mehrere Rückwandteile aufweist, wobei die Rückwandteile sich jeweils von Seitenwand zu Seitenwand hin erstrecken. Dadurch, dass die Rückwand bzw. die Rückwandteile sich jeweils über die ganze Breite hin erstrecken, wird eine stabile Konstruktion herstellbar.

Günstigerweise ist hinter der Rückwand bzw. einem Rückwandteil des Möbelauszugs ein Möbelantrieb anordenbar. Somit kann ein derartiger Möbelauszug auch angetrieben werden.

Konkret wird auch Schutz begehrt für ein Möbel mit einem bewegbaren Möbelauszug nach einer der beschriebenen Ausführungsformen.

Weitere Einzelheiten und Vorteile der vorliegenden Erfindung werden anhand der Figurenbeschreibung unter Bezugnahme auf die in der Zeichnung dargestellten Ausführungsbeispiele im Folgenden näher erläutert. Darin zeigen
- Fig. 1: einen Schnitt durch ein Möbel in Seitenansicht mit ausgezogenem Möbelauszug,
- Fig. 2: einen Schnitt in Seitenansicht eines Möbels mit eingefahrenem Möbelauszug,
- Fig. 3: eine perspektivische Ansicht eines Möbelauszuges,
- Fig. 4: eine perspektivische Ansicht eines Möbelauszugs mit Aufnahmevorrichtung,
- Fig. 5: eine perspektivische Ansicht eines Möbelauszugs mit einer Aufnahmevorrichtung und mit einem Aufbewahrungssystem,
- Fig. 6: eine perspektivische Ansicht eines ausgezogenen Möbelauszugs mit Aufbewahrungssystem,
- Fig. 7a: eine perspektivische Ansicht einer Aufnahmevorrichtung,
- Fig. 7b: eine perspektivische Ansicht einer Rückwand,
- Fig. 8: eine perspektivische Ansicht eines Möbels mit ausgezogenem Möbelauszug und
- Fig. 9: eine perspektivische Rückansicht eines Möbels.

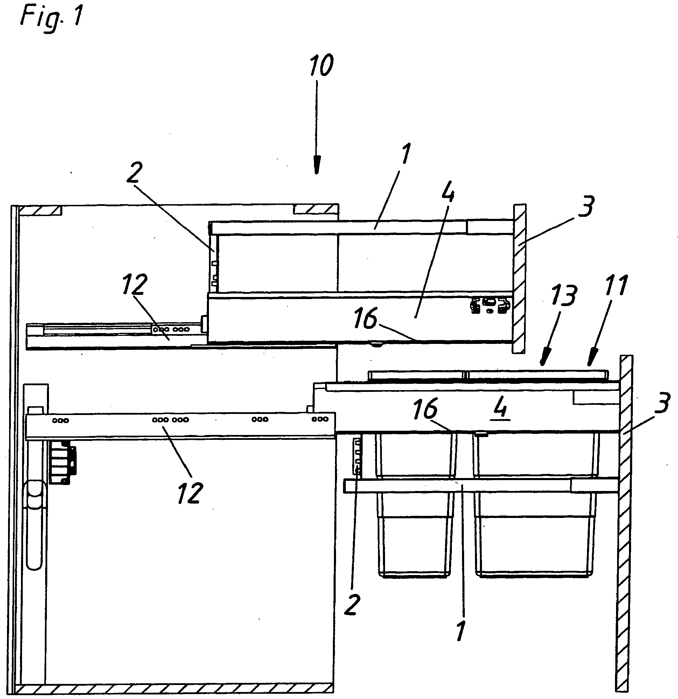

Figur 1 zeigt einen Schnitt durch ein Möbel 10 in Seitenansicht. Im oberen Teil des Möbels 10 ist eine Schublade nach dem Stande der Technik angeordnet, welche über eine Ladenschiene 16 eines Schienensystems 12 im Möbel 10 bzw. dessen Möbelkorpus 17 beweglich angeordnet ist. Diese Schublade nach dem Stande der Technik ist mit einer Relingstange 1, Seitenwänden 4, einer Rückwand 2 und einer Frontblende 3 ausgestattet. Die Frontblende 3 kann dabei mittels der Relingstange 1 in ihrer Neigung bezüglich des Möbelkorpus 17 verändert werden.

Im unteren Bereich des Möbels 10 ist der bewegliche Möbelauszug 11 angeordnet, welcher über Ladenschienen 16 beweglich auf dem Schienensystem 12 angeordnet ist. Der Möbelauszug 11 weist hierbei ebenso Seitenwände 4, eine Rückwand 2, eine Frontblende 3 und eine Relingstange 1 auf, mit dem Unterschiede zum Stande der Technik, dass die Relingstange 1 unterhalb der Seitenwand angeordnet ist. Dadurch wird ein stabiler Möbelauszug 11 für im oberen Bereich angebrachte Seitenwände 4 - welche eine Aufbewahrungssystem 13 aufzunehmen haben - geschaffen.

Die Frontblende 3 erstreckt sich dabei sowohl bis unterhalb der Seitenwand 4 als auch bis unterhalb der Reling 1.

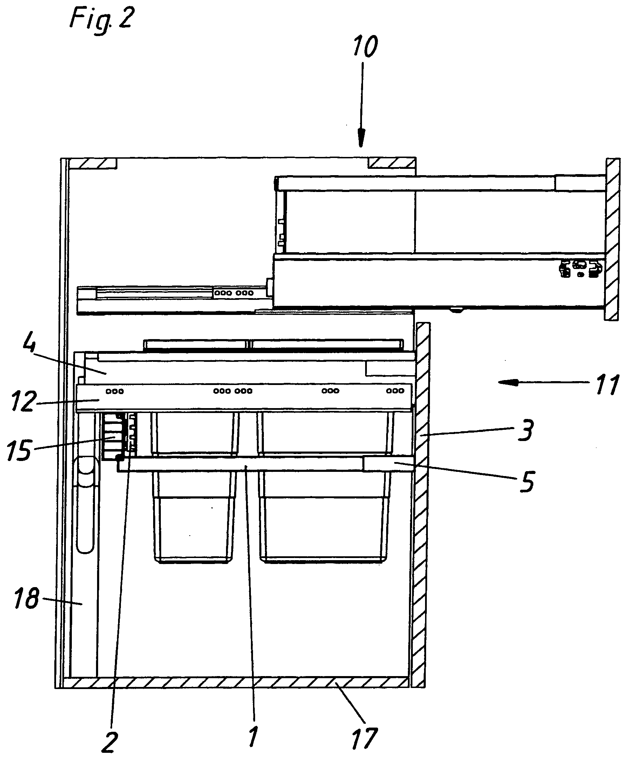

Figur 2 zeigt einen Schnitt durch die Seitenansicht eines Möbels 10, bei der sich der bewegbare Möbelauszug 11 in eingefahrener Stellung befindet. Mittels der Relingstange 1 kann die Neigung der Frontblende 3 durch die Verstellvorrichtung 5 verändert und somit am Möbelkorpus 17 ausgerichtet werden. Dabei wird durch die Verstellvorrichtung 5 die Länge der Relingstange 1, welche sich einerseits an der Innenseite der Frontblende 3 und andererseits hinten an der Rückwand 2 abstützt, verändert.

Die Rückwand 2 des Möbelauszugs 11 ist dabei vom hinteren Ende des Schienensystems 12 beabstandet, was dazu führt, dass sowohl einerseits ein Abflusssystem für ein Waschbecken 18 hinter dem Möbelauszug 11 im Möbel 10 anordenbar ist als auch andererseits ein Möbelantrieb 15 für eine automatische Bewegung des Möbelauszugs 11 hinter der Rückwand 2 und vor dem Abflusssystem 18 Platz findet.

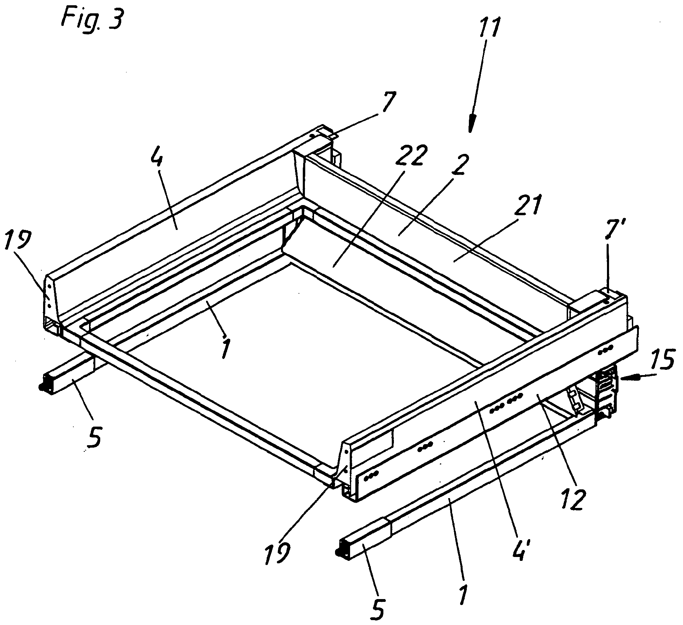

Figur 3 zeigt einen bewegbaren Möbelauszug 11 wie er üblicher Weise in einem hier nicht dargestellten Möbel 10 bzw. dessen Möbelkorpus 17 (nicht dargestellt) angeordnet ist. Ebenso ist in diese Darstellung die Frontblende 3 des Möbelauszugs 11 nicht dargestellt. Diese Frontblende 3 ist üblicher Weise an den Enden der Seitenwände 4, 4' über die Befestigungsvorrichtungen 19 an dem Möbelauszug 11 angeordnet. Ebenso weist der Möbelauszug 11 die Relingstangen 1 und die darauf befindlichen Verstellvorrichtungen 5 auf, welche sich zwischen der Frontblende 3 und der Rückwand 2 befinden. Über die Verstellvorrichtungen 5 kann die effektive Länge der Relingstangen 1 verändert werden, was dazu führt, dass die Frontblende 3 geneigt und somit am Möbelkorpus 17 ausgerichtet werden kann.

Angeordnet ist dieser Möbelauszug 11 an einem Schienensystem 12, über das der Möbelauszug 11 horizontal aus dem Möbel 10 bzw dem Möbelkorpus 17 bewegt werden kann.

In diesem Möbelauszug 11 sind die Seitenwände 4, 4' im oberen Bereich des Möbelauszugs 11 angeordnet, da sie ein hängendes Aufbewahrungssystem 13 aufnehmen sollen. Dafür ist eine hohe Stabilität - speziell im oberen Bereich des Möbelauszugs 11 - gewünscht. Um die Stabilität eines derartigen Möbelauszuges 11 zu erhöhen sind dabei die Relingstangen 1 unterhalb der Seitenwände 4, 4' angeordnet. Die Relingstangen 1 sind dabei in ihrer effektiven Länge durch die Verstellvorrichtungen 5 veränderbar, wobei sich die Relingstangen 1 einerseits vorne an der Innenseite der Frontblende 3 und andererseits hinten an der Rückwand 2 abstützen. Diese Längenveränderung der Relingstangen 1 führt zu einem Kippen der Frontblende 3, wodurch die Frontblende 3 an der Vorderseite des Möbelkorpus 17 parallel anordenbar wird.

In diesem Ausführungsbeispiel sind die Seitenwände 4, 4' im Wesentlichen über dem Schienensystem 12 angeordnet, wodurch für diesen speziellen Möbelauszug 11 bereits zum Stand der Technik gehörende Schienensysteme 12 und deren nicht dargestellte Ladenschienen 16 verwendbar sind. Die Relingstangen 1 hingegen sind unterhalb des Schienensystems 12 angeordnet, wodurch - durch diese Aufteilung der Seitenwände 4, 4' oberhalb des Schienensystems 12 - und den Relingstangen 1 unterhalb des Schienensystems 12 eine äußerst stabile Konstruktion eines Möbelauszugs 11 geschaffen wird.

Die Rückwand 2 des Möbelauszugs 11 ist dabei vom hinteren Ende des Möbelauszug 11 beabstandet. Somit kann zum Beispiel hinter der Rückwand 2 eine Abflusssystem 18 (nicht dargestellt) verlaufen und es bleibt gewährleistet, dass der Möbelauszug 11 vollständig in den Möbelkorpus 17 einfahren kann.

Die Rückwand 2 des Möbelauszugs 11 ist dabei ebenso vom hinteren Ende des Schienensystems 12 bzw. der Ladenschiene 16 des Schienensystems 12 beabstandet, welches den positiven Effekt hervorruft, dass ein zum Stande der Technik gehörendes Schienensystem verwendet werden kann und trotzdem ein Abstand der Rückwand 2 zur Rückseite des Möbelkorpusses 17 geschaffen wird.

Ebenso ist die Rückwand 2 des Möbelauszugs 11 mit Abstand von den Hinterkanten der Seitenwände 4, 4' des Möbelauszugs 11 nach vorne versetzt angeordnet, was dazu führt, dass auch bereits zum Stand der Technik gehörende Seitenwände 4, 4' zum Einsatz gelangen können.

Dabei werden Beschlagteile 7, 7' verwendet, welche die Rückwand 2 versetzt zu den Hinterkanten der Seitenwände 4, 4' anordnen. Diese Beschlagteile 7, 7' sind in diesem Ausführungsbeispiel aus Kunststoff oder Metall ausgebildet und können werkzeuglos an der Rückwand 2 bzw. den Seitenwänden 4, 4' angeordnet werden.

In diesem Ausführungsbeispiel ist die Rückwand 2 einstückig ausgebildet, wobei hinter dem unteren Bereich der Rückwand 2 ein Möbelantrieb 15 (nicht dargestellt) Platz finden kann. Diese Rückwand 2 könnte ebenso aus mehreren Rückwandteilen 21, 22 bestehen, falls dies fertigungstechnisch Vorteile bringt Hier ist die Rückwand 2 einstückig ausgebildet und verläuft im oberen Bereich ohne Unterbrechung von einer Seitenwand 4 zur zweiten Seitenwand 4' und im unteren Bereich einer Relingstange 1 zur zweiten Relingstange 1. Durch diese unterbrechungsfreie Verbindung wird die Stabilität der gesamten Konstruktion erhöht.

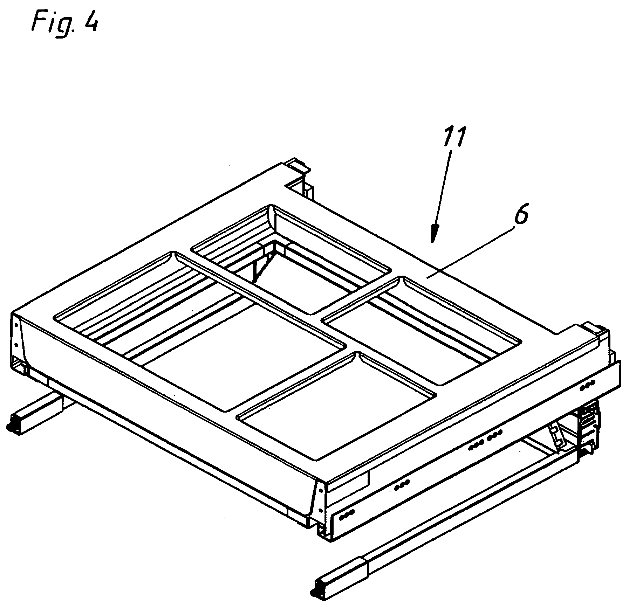

Figur 4 zeigt einen Möbelauszug 11 wie in Figur 3 beschrieben, wobei auf diesem bereits eine rahmenförmige Aufnahmevorrichtung 6 werkzeuglos aufgesetzt ist.

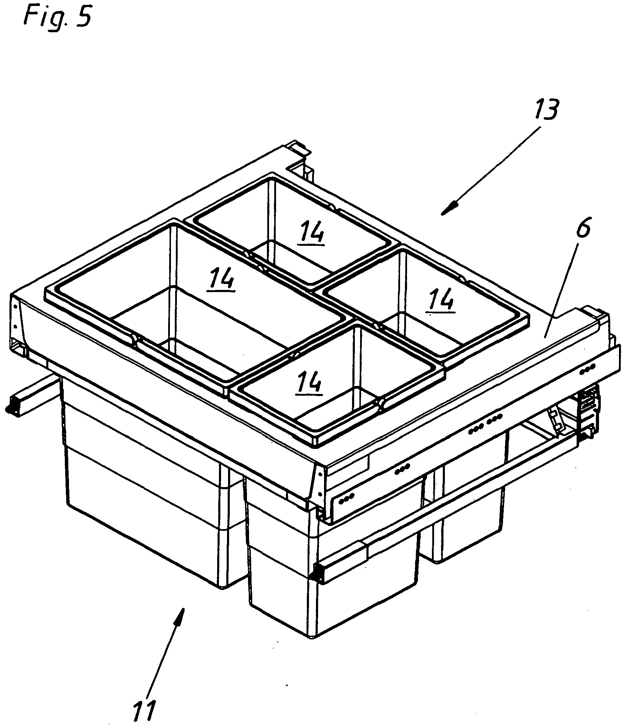

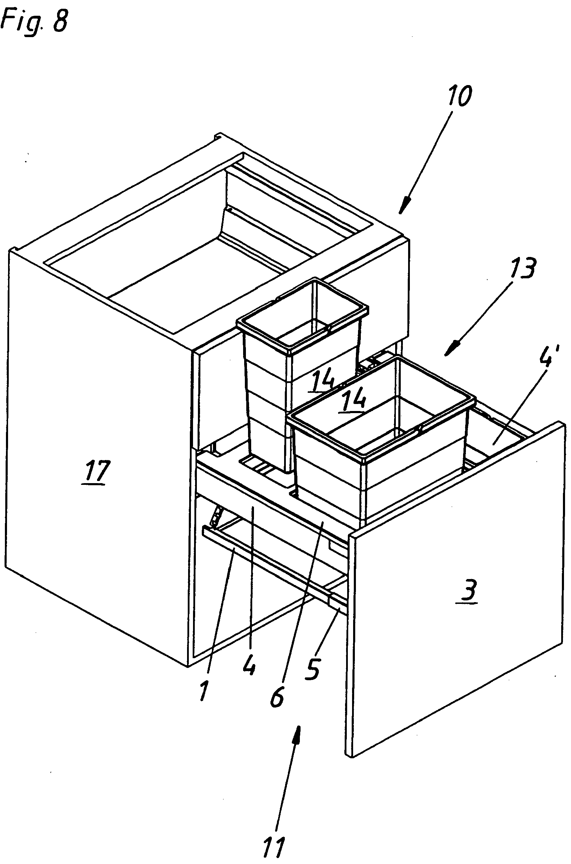

Diese Aufnahmevorrichtung 6 ist - wie in Figur 5 ersichtlich - zur Aufnahme eines Aufbewahrungssystems 13 angedacht. Das Aufbewahrungssystem 13 weist in diesem Fall vier Aufbewahrungsbehältnisse 14 auf, welche lösbar und werkzeuglos nach oben aus der Aufnahmevorrichtung 6 entnommen werden können. Dies ist ebenso bei voll ausgezogenem Möbelauszug 11 möglich (siehe Figur 8).

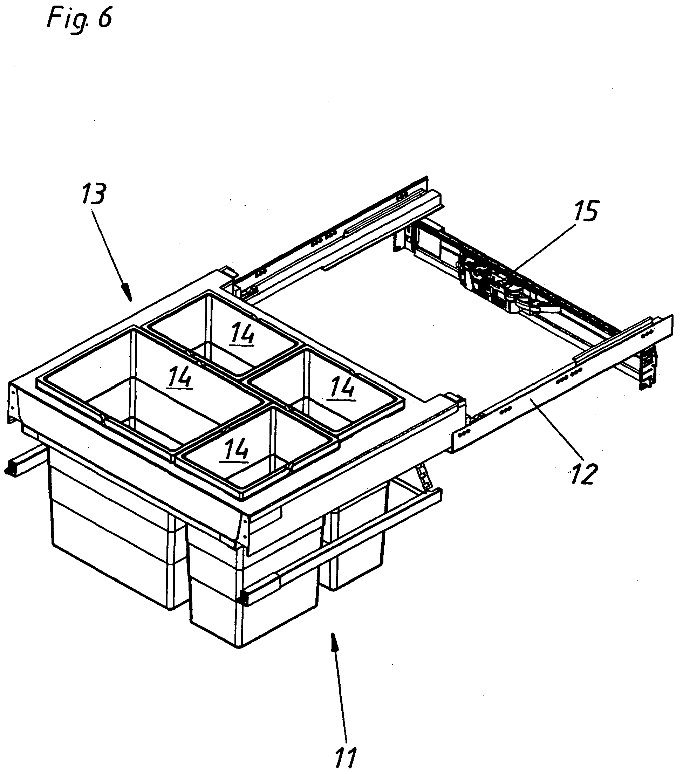

In Figur 6 ist der Möbelauszug 11 wie eben in Figur 5 beschrieben dargestellt, wobei er sich hier nun in seiner zweiten Maximalstellung - voll ausgezogen - befindet. In dieser Stellung ist der Möbelantrieb 15 erkennbar, weicher zum motorisch angetriebenen horizontalen Bewegen des Möbelauszugs 11 dient.

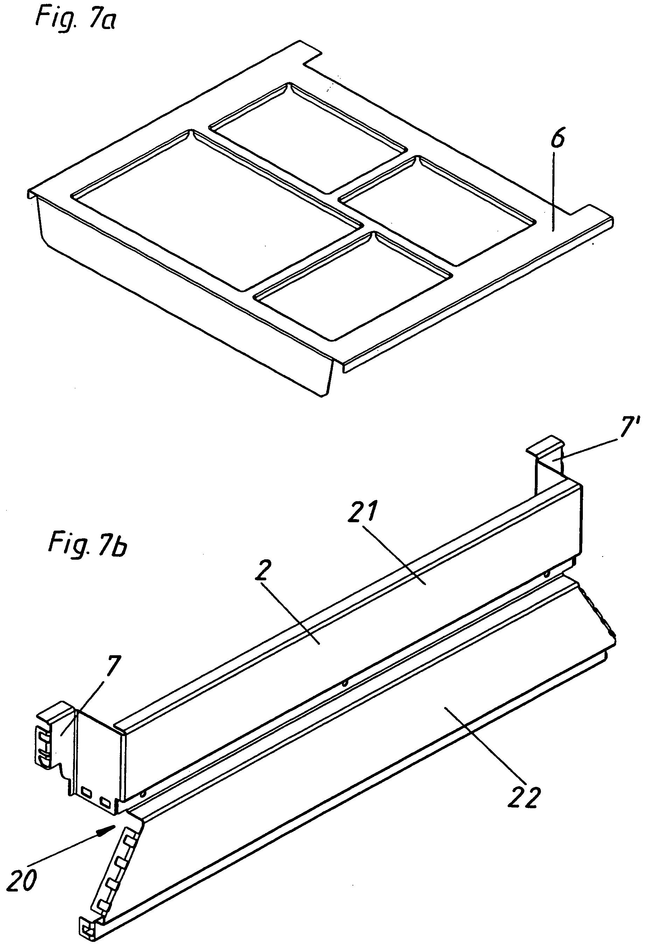

Figur 7a zeigt die vorzugsweise einstückig ausgebildete, rahmenförmige Aufnahmevorrichtung 6, welche dazu dient, dass sie die nicht dargestellten Aufbewahrungsbehältnisse 14 des nicht dargestellten Aufbewahrungssystems 13 hängend aufnehmen kann (siehe Figur 5 und 8).

Figur 7b zeigt die Rückwand 2, an der links und rechts die beiden Beschlagteile 7, 7' angeordnet sind, über die die Rückwand 2 mit den hier nicht dargestellten Seitenwänden 4, 4' werkzeuglos und lösbar verbunden werden kann (siehe Figur 3). Im unteren Bereich der Rückwand 2 werden die hier nicht dargestellten Relingstangen 1 angeordnet. In diesem Ausführungsbeispiel ist die Rückwand 2 einstückig ausgebildet und weist ein z-förmiges Profil 20 auf. Ebenso wäre es natürlich vorstellbar, dass die Rückwand 2 aus zwei oder mehreren Rückwandteilen 21, 22 gefertigt ist.

Figur 8 zeigt ein Möbel 10, welches einen Möbelkorpus 17 und einen Möbelauszug 11 aufweist. Der Möbelauszug 11 verfügt über eine Aufnahmevorrichtung 6 zur Aufnahme eines Aufbewahrungssystems 13, welches Aufbewahrungsbehältnisse 14 aufweist. Diese Aufbewahrungsbehältnisse 14 sind bei ausgezogenem Möbelauszug 11 im Wesentlichen senkrecht aus der Aufnahmevorrichtung 6 entnehmbar. Die unter den Seitenwänden 4, 4' angeordneten Relingstangen 1 (nur eine Relingstange 1 sichtbar) erhöhen die Stabilität des Möbelauszugs 11 und verfügen weiters über die Fähigkeit, dass über die Verstellvorrichtungen 5 (nur eine Verstellvorrichtung 5 dargestellt) die Frontblende 3 geneigt werden kann, wodurch die Frontblende 3 zum Möbelkorpus 17 ausgerichtet werden kann.

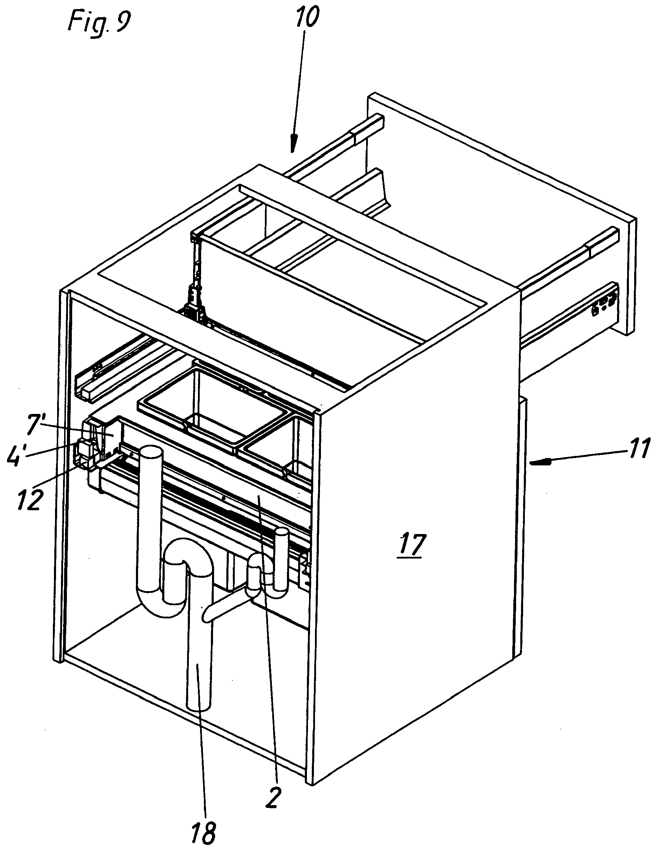

Figur 9 zeigt eine perspektivische Rückansicht eines Möbels 10 mit einem Möbelauszug 11, wobei sich der Möbelauszug 11 in seinem voll eingefahrenem Zustand im Möbelkorpus 17 befindet. Dadurch, dass die Rückwand 2 vom hinteren Ende des Schienensystems 12 bzw. vom hinteren Ende der Seitenwände 4,4' (Seitenwand 4 nicht sichtbar) beabstandet ist, wird es ermöglicht, dass ein Abflusssystems 18 oder Ähnliches hinter dem Möbelauszug 11 verlaufen kann. Erreicht wird diese Beabstandung der Rückwand 2 vom Schienensystem 12 bzw, der Seitenwände 4,4' durch die Beschläge 7,7' (Beschlag 7 nicht sichtbar).

Wenn auch die Erfindung anhand des gezeigten Ausführungsbeispiels konkret beschrieben wurde, versteht es sich von selbst, dass der Anmeldegegenstand nicht auf dieses Ausführungsbeispiel beschränkt ist.

## Patentansprüche

1. Bewegbarer Möbelauszug (11) für ein Möbel (10) mit einer zwischen einer Rückwand (2) und einer Frontblende (3) angeordneten Seitenwand (4) und einer zwischen der Rückwand (2) und der Frontblende (3) angeordneten Relingstange (1) und einem Schienensystem (12) zum Bewegen des Möbelauszugs (11), wobei die Seitenwand (4) zumindest teilweise über dem Schienensystem (12) ausgebildet ist, wobei die Relingstange (1) unterhalb der Seitenwand (4) und unter dem Schienensystem (12) angeordnet ist, daduch gekennzeichnet, dass die Relingstange (1) eine Verstellvorrichtung (5) aufweist, durch welche die Frontblende (3) neigbar ist, wobei die Verstellvorrichtung (5) die effektive Länge der Relingstange (1) verändert, wobei sich die Relingstange (1) einerseits vorne an der Innenseite der Frontblende (3) und andererseits hinten an der Rückwand (2) abstützt:

2. Möbelauszug nach Anspruch 1, **dadurch gekennzeichnet, dass** die Seftenwand (4) im Wesentlichen vollständig über dem Schienensystem (12) ausgebildet ist.

3. Möbelauszug nach Anspruch 1 oder 2, **dadurch gekennzeichnet, dass** der Möbelauszug (11) eine Aufnahmevorrichtung (6) - vorzugsweise für ein Aufbewahrungssystem (13) zur Mülltrennung - aufweist, wobei die - vorzugsweise rahmenförmige - Aufnahmevorrichtung (6) zumindest teilweise, vorzugsweise im Wesentlichen vollständig, über und/oder zumindest teilweise zwischen zweier Seitenwände (4, 4') des Möbelauszuges (11) ausgebildet ist.

4. Möbelauszug nach Anspruch 3, **dadurch gekennzeichnet, dass** der Möbelauszug (11) ein Aufbewahrungssystem (13) zur Mülltrennung aufweist, wobei das Aufbewahrungssystem (13) - vorzugsweise werkzeuglos - an der Aufnahmevorrichtung (6) lösbar befestigbar ist.

5. Möbelauszug nach Anspruch 3 oder 4, **dadurch gekennzeichnet, dass** das Aufbewahrungssystem (13) hängend in der Aufnahmevorrichtung (6) angeordnet Ist und die Aufbewahrungsbehältnisse (14) bei ausgezogenem Möbelauszug (11) im Wesentlichen senkrecht aus der Aufnahmevorrichtung (6) entnehmbar sind.

6. Möbelauszug nach einem der Ansprüche 1 bis 5, **dadurch gekennzeichnet, dass** die Rückwand (2) des Möbelauszugs (11) vom hinteren Ende des Möbelauszugs beabstandet angeordnet ist.

7. Möbelauszug nach einem der Ansprüche 1 bis 6, **dadurch gekennzeichnet, dass** die Rückwand (2) des Möbelauszugs (11) vom hinteren Ende des Schienensystems (12), vorzugsweise einer Ladenschiene (16) des Schienensystems (12), beabstandet angeordnet ist.

8. Möbelauszug nach einem der Ansprüche 1 bis 7, **dadurch gekennzeichnet, dass** die Rückwand (2) des Möbelauszugs (11) mit Abstand von den Hinterkanten der Seitenwände (4) des Möbelauszugs (11) nach vorne versetzt angeordnet ist.

9. Möbelauszug nach einem der Ansprüche 1 bis 8, **dadurch gekennzeichnet, dass** - vorzugsweise aus Kunststoff gefertigte - Beschlagteile (7) vorgesehen sind, die die Rückwand (2) mit - vorzugsweise den Hinterkanten - den Seitenwänden (4) - vorzugsweise werkzeuglos und/oder lösbar - verbinden.

10. Möbelauszug nach einem der Ansprüche 1 bis 9, **dadurch gekennzeichnet, dass** die Rückwand (2) des Möbelauszugs (11) einstückig ausgebildet ist oder dass die Rückwand (2) des Möbelauszugs (11) zwei oder mehrere Rückwandteile (21, 22) aufweist, wobei die Rückwandteile (21, 22) sich jeweils von Seitenwand (4) zu Seitenwand (4') hin erstrecken.

11. Möbelauszug nach einem der Ansprüche 1 bis 10, **dadurch gekennzeichnet, dass** hinter der Rückwand (2) bzw. einem Rückwandteil (21, 22) des Möbelauszugs (11) ein Möbelantrieb (15) anordenbar ist.

12. Möbel (10) mit einem bewegbaren Möbelauszug (11) nach einem der Ansprüche 1 bis 11.

## Claims

1. A movable furniture extension (11) for an article of furniture (10) including a side wall (4) arranged between a rear wall (2) and a front panel (3), a rail strut (1) arranged between the rear wall (2) and the front panel (3), and a rail system (12) for moving the furniture extension (11), wherein the side wall (4) is at least partially located above the rail system (12) and wherein the rail strut (1) is located below the side wall (4) and below the rail system (12), **characterized in that** the rail strut (1) has an adjusting device (5) by way of which the front panel (3) can be inclined, wherein the adjusting device (5) is configured to change an effective length of the rail strut (1), wherein the rail strut (1), in the front, is supported at an inside of the front panel (3) and, in the rear, is supported at the rear wall (2).

2. The furniture extension according to claim 1, **characterized in that** the side wall (4) is located completely above the rail system (12).

3. The furniture extension according to claim 1 or 2, **characterized in that** the furniture extension (11) comprises a receiving device (6), preferably a storage system (13) for garbage separation, wherein the - preferably frame-shaped - receiving device (6) is located at least partially, preferably substantially completely, above and/or at least partially between two side walls (4, 4') of the furniture extension (11).

4. The furniture extension according to claim 3, **characterized in that** the furniture extension (11) includes a storage system (13) for garbage separation, wherein the storage system (13) can be releasably attached to the receiving device (6), preferably without the use of a tool.

5. The furniture extension according to claim 3 or 4, **characterized in that** the storage system (13) is configured to hang in the receiving device (6) and that the storage containers (14), when the furniture extension (11) is extended, can be removed perpendicularly from the receiving device (6).

6. The furniture extension according to one of the claims 1 to 5, **characterized in that** the rear wall (2) of the furniture extension (11) is spaced apart from the rear end of the furniture extension.

7. The furniture extension according to one of the claims 1 to 6, **characterized in that** the rear wall (2) of the furniture extension (11) is spaced apart from the rear end of the rail system (12), preferably from a drawer rail (18) of the rail system (12).

8. The furniture extension according to one of the claims 1 to 7, **characterized in that** the rear wall (2) of the furniture extension (11) is spaced apart in a forward direction from the rear edges of the side walls (4) of the drawer extension (11).

9. The furniture extension according to one of the claims 1 to 8, **characterized in that** provided are fitting portions (7), preferably made of plastic, which connect the rear wall (2) with, preferably the rear edges of, the side walls (4), preferably without the use of a tool and/or releasably.

10. The furniture extension according to one of the claims 1 to 9, **characterized in that** the rear wall (2) of the furniture extension (11) is formed in one piece, or that the rear wall (2) of the furniture extension (11) includes two or more rear wall portions (21, 22), wherein the rear wall portions (21, 22) each extend from one side wall (4) to the other side wall (4').

11. The furniture extension according to one of the claims 1 to 10, **characterized in that** a furniture drive (15) can be arranged behind the rear wall (2) or behind a rear wall portion (21, 22) of the furniture extension (11).

12. An article of furniture (10) having a movable furniture extension (11) according to one of the claims 1 to 11.

## Revendications

1. Tiroir (11) mobile pour un meuble (10), avec une paroi latérale (4) disposée entre une paroi arrière (2) et une façade (3), une coulisse (1) disposée entre la paroi arrière (2) et la façade (3) et un système de rail (12) pour le déplacement du tiroir (11) pour meuble, la paroi latérale (4) étant formée au moins en partie au-dessus du système de rail (12), la coulisse (1) étant disposée en dessous de la paroi latérale (4) et sous le système de rail (12), **caractérisé en ce que** la coulisse (1) comprend un mécanisme de réglage (5) au moyen duquel la façade (3) est inclinable, ledit mécanisme de réglage (5) modifiant la longueur effective de la coulisse (1), ladite coulisse (1) s'appuyant d'un côté, avant, contre la face intérieure de la façade (3) et de l'autre côté, arrière, contre la paroi arrière (2).

2. Tiroir pour meuble selon la revendication 1, **caractérisé en ce que** la paroi latérale (4) est formée pratiquement en totalité au-dessus du système de rail (12).

3. Tiroir pour meuble selon la revendication 1 ou 2, **caractérisé en ce que** le tiroir (11) pour meuble comporte un dispositif de réception (6) - de préférence pour un système de stockage (13) pour le tri des déchets, le dispositif de réception (6) - de préférence en forme de cadre - étant formé au moins en partie, de préférence pratiquement en totalité, au-dessus de deux parois latérales (4, 4') du tiroir (11) pour meuble et/ou au moins en partie entre celles-ci.

4. Tiroir pour meuble selon la revendication 3, **caractérisé en ce que** ledit tiroir (11) pour meuble comporte un système de stockage (13) pour le tri des déchets, le système de stockage (13) étant fixable de façon amovible - de préférence sans outil - sur le dispositif de réception (6).

5. Tiroir pour meuble selon la revendication 3 ou 4, **caractérisé en ce que** le système de stockage (13) est suspendu dans le dispositif de réception (6) et **en ce que** les récipients de stockage (14) peuvent être sortis sensiblement perpendiculairement du dispositif de réception (6) quand le tiroir (11) pour meuble est ouvert.

6. Tiroir pour meuble selon l'une des revendications 1 à 5, **caractérisé en ce que** la paroi arrière (2) du tiroir (11) pour meuble est espacée de son extrémité arrière.

7. Tiroir pour meuble selon l'une des revendications 1 à 6, **caractérisé en ce que** la paroi arrière (2) du tiroir (11) pour meuble est espacée de l'extrémité arrière du système de rail (12), de préférence d'un rail de charge (16) du système de rail (12).

8. Tiroir pour meuble selon l'une des revendications 1 à 7, **caractérisé en ce que** la paroi arrière (2) du tiroir (11) pour meuble est décalée vers l'avant par rapport aux bords arrière des parois latérales (4) du tiroir (11) pour meuble.

9. Tiroir pour meuble selon l'une des revendications 1 à 8, **caractérisé en ce que** des pièces de ferrure (7) sont prévues - fabriquées de préférence en matière plastique, lesquelles raccordent la paroi arrière (2) aux parois latérales (4) - de préférence sur les bords arrière - de préférence sans outil et/ou de manière amovible.

10. Tiroir pour meuble selon l'une des revendications 1 à 9, **caractérisé en ce que** la paroi arrière (2) du tiroir (11) pour meuble est en une seule pièce ou **en ce que** la paroi arrière (2) du tiroir (11) pour meuble présente deux ou plusieurs parties de paroi arrière (21, 22), lesdites parties de paroi arrière (21, 22) s'étendant de la paroi latérale (4) à la paroi latérale (4').

11. Tiroir pour meuble selon l'une des revendications 1 à 10, **caractérisé en ce qu'**un entraînement de meuble (15) peut être disposé derrière la paroi arrière (2) ou une partie de paroi arrière (21, 22) du tiroir (11) pour meuble.

12. Meuble (10) avec un tiroir (11) mobile pour meuble selon l'une des revendications 1 à 11.
